# EUROPEAN PATENT SPECIFICATION

(11) **EP 4 127 330 B1**
(45) Date of publication and mention of the grant of the patent: **11.11.2026**
(21) Application number: 21715250.3
(22) Date of filing: 29.03.2021
(51) Int. Cl.: B67D 1/00, B67D 1/04, B67D 1/08, E03B 1/00, E03B 7/07, E03C 1/02, A47J 31/60

(54) **BEVERAGE PREPARATION DEVICE WITH A FLOW SEPARATION DEVICE**
GETRÄNKEZUBEREITUNGSVORRICHTUNG MIT EINER STRÖMUNGSTRENNVORRICHTUNG
DISPOSITIF DE PRÉPARATION DE BOISSONS ÉQUIPÉ D'UN DISPOSITIF DE SÉPARATION DE DÉBIT

(30) Priority: 30.03.2020 EP 20166612
(43) Date of publication of application: 08.02.2023
(73) Proprietor: Société des Produits Nestlé S.A., 1800 Vevey (CH)
(72) Inventor: PUGLIESE, Alexandre, 1094 Paudex (CH); PERENTES, Alexandre, 1036 Sullens (CH); CALDERONE, Roberto Angelo, 1350 Orbe (CH)
(74) Representative: Pasquino, Fabio
(86) International application number: PCT/EP2021/058092
(87) International publication number: WO 2021/198144

(56) References cited:
- US-A- 4 095 610
- US-A1- 2017 130 432
- US-A1- 2018 244 541
- US-B1- 7 650 830

## Description

### Field of the invention

The present invention relates to a beverage preparation device comprising a flow separation device and a method for separating a flow for preparing a beverage.

### Technical background

Separating a flow is crucial in many fields. Flow separation or redirection in particular effects that a flow flows in a specific direction before being redirected to flow in another direction. US4095610 A discloses a valve for mixing liquids having different properties, which maintains a selected flow ratio of the liquids despite pressure changes in the inlet lines, allows discharge through either of two outlets, and which permits regulation of the flow rate through either of the outlets.

This may have several reason. One reason is, for example, that the flow to be redirected in the other direction does not fulfil certain requirements, such as quality requirements. For example, water may be consumed by a human, wherein this water needs to fulfill certain criteria to be drinkable. Such quality criteria include, amongst others, that the water does (substantially) not include pathogens (also called "germs"), i.e. an infectious microorganism or agent, such as a virus, bacterium, or fungus, or at least the amount of the same is under a defined value in order to be drinkable. In general, germs may produce a disease.

Thus, separating or redirection a flow may be required to redirect the flow in order to prevent a user (human) from having access to this flow, e.g. since the flow is a flow of water not suitable for drinking. This problem is in particular present where the respective water network does not provide germ-free or sanitized water, which constitutes a severe risk for the consumer.

Separating or redirecting a flow may be cumbersome, requiring many active steps. This may lead to costly maintenance. Further, means for separating or redirecting a flow may be complex and, thus, difficult to produce. This also adversely affects the costs.

Therefore, it is an object of the present invention to overcome the afore-mentioned drawbacks. That is, it is in particular an object of the present invention to provide an easier separation (redirection) of a flow.

These and other objects, which become apparent upon reading the following description, are solved by the subject matter of the independent claims. The dependent claims refer to preferred embodiments of the invention.

### Summary of the invention

According to the invention, a beverage preparation device comprising a flow separation device is provided. For example, the flow separation device may be used in the beverage preparation device for redirecting a flow of water that is sanitized and, thus, ready to drink.

The flow separation device comprises: a first delivery line to drain water from a buffer tank, a branching section provided downstream the first delivery line, wherein the branching section branches the first delivery line into a second delivery line and a third delivery line, each of the second and third delivery line leading to a respective discharge outlet, and a flow rate control device for delivering water through the flow separation device and for adjusting the flow rate of the water. Each of the second delivery line and third delivery line comprises a respective section, wherein said sections are arranged such that if water is delivered by the flow rate control device at a flow rate below a defined threshold value the water is delivered beyond the section of the second delivery line but not beyond the section of the third delivery line, thereby discharging the water via the discharge outlet of the second delivery line, and if water is delivered by the flow rate control device at a flow rate at or above the defined threshold value the water is at least partially delivered beyond the section of the third delivery line, thereby discharging the water at least partially via the discharge outlet of the third delivery line.

In other words, the flow separation device may be a flow redirection or flow direction device. In particular, the flow separation device facilitates that only the flow rate control device must be operated or used for selectively circulating the water along the second delivery line (e.g. for forming or being part of a recirculation path) or third delivery line (e.g. for forming or being a discharge line) and towards the respective discharge outlet. Hence, based on using a difference of flow rate the fluid or liquid is allowed to access another line. The separation or (re)direction of the flow thus depends on the energy of the flow of water only. This effects that a very simple flow separation device is provided, which does not require a complex structure, in particular requiring less parts and components. This in particular for the reason that the delivery lines and the branching section, i.e. a flow direction structure, form a passive arrangement, which does not need to be actively controlled. For example, for the redirection of the flow, no or at least a substantially reduced number of valves is required.

Compared to the second delivery line, the third delivery line may extend longer. The respective extending direction is from the branching section to the respective discharge outlet, thereby defining the extension of the flow via the respective line (e.g. an arched extension). Since the energy of the flow of water may not suffice for traveling along the longer third delivery line, thereby flowing into the second line and out of the discharge outlet of the second line, an easy redirection of the flow is achieved.

Alternatively, the third delivery line may, compared to the second delivery line and with respect to the vertical, reach higher. Thus, the gravity may effect that the flow of water reaches only a predetermined height, thereby flowing, dependent on the flow rate, in the second delivery line and/or the third delivery line. In other words, for flowing into the second delivery line and via the respective discharge outlet, less potential energy is required than for flowing into the third delivery line and via the respective discharge outlet.

Compared to the second delivery line, the third delivery line may reach further with respect to a direction that is oblique to the horizontal, such as oblique with an angle in the range from 0.5 to 5 degree. In other words, said direction may be substantially horizontal. For example, the first delivery line may extend substantially in the horizontal, wherein at least part of the second delivery line (for example, a part extending from the branching section) extends to be oblique to the horizontal, such as oblique with said angle. The oblique direction may be advantageous for removing residual water from the flow separation device by gravity only. Thus, drying of the flow separation device is easily achieved. For example, both the second delivery line and the third delivery line extend in the same plane, wherein this plane is perpendicular to a vertically extending plane and oblique to the horizontal, with the angle as mentioned before.

The first delivery line, the second delivery line, and/or the third delivery line may be arranged such that, when the flow rate control device does not deliver water, the residual water remaining in the respective delivery line flows by gravity out of the respective delivery line, e.g. towards the discharge outlet of the second delivery line and/or the discharge outlet of the third delivery line. Thus, very easy drying of the flow separation device, i.e. removing of residual water from the flow separation device, is effected, in particular not requiring active components for removing the residual water.

Heating elements may be provided to speed-up drying the second and third delivery lines when necessary. Alternatively, blowing heated air within these delivery lines can be provided.

The flow separation device may comprise an orifice that is provided between the first delivery line and the branching section, the orifice preferably extending straight towards the third delivery line. The orifice may be used for adding something such as a substance to the flow upstream of the branching section, e.g. CO2.

The flow rate control device may be provided in the first delivery line. The flow rate control device may be a pump and/or a valve and/or a tap. The tap may comprise different openings, each opening defining a respective flow rate. Thus, a very easy adjustment of the flow rate is achieved.

The beverage preparation device may further comprise a buffer tank, the buffer tank having a tank body for storing an amount of water, wherein the first delivery line is arranged to drain water from the buffer tank, and wherein the second delivery line leads via its discharge outlet back into the buffer tank thus forming a closed loop. The beverage preparation device may further comprise a UV lamp for UV light treatment of water within the closed loop. The flow rate control device is arranged to deliver water through the beverage preparation device.

The beverage preparation device thus facilitates that no access to the beverage preparation device is required to inactivate (deactivate) or destroy the pathogens (in the following also referred to as "germs", such as viruses, bacteria, fungi, etc.) in the water. Therefore, the water is easily sanitized and, thus, purified, and the risk of the water, discharged from the beverage preparation device to a consumer, containing germs is eliminated or at least substantially reduced. For example, the beverage preparation device may have a sanitization mode and a discharging mode, wherein in the sanitization mode, the water circulates along the closed loop (i.e. a recirculation path, which leads at least along a recirculation line) and is sanitized by the UV light of the UV lamp, and wherein in the dispensing mode, the so sanitized water is discharged via the discharge outlet of the third delivery line (i.e. a discharge line). As such, the beverage preparation device may include only the sanitization mode and the dispensing mode in order to sanitize and, thus, purify the water. Further, the beverage preparation device may be used with water irrespective of the water quality (e.g. also germ-containing water), since the beverage preparation device provides an integral sanitization of the water, which is subsequently, i.e. when sanitization has been finished, dispensed via the discharge outlet of the third delivery line.

The UV lamp may be arranged to irradiate UV light into the buffer tank and/or into the first delivery line and/or into the second delivery line. As such, a very effective sanitization of the water is achieved.

The beverage preparation device may further comprise a cooling unit for cooling the water within the buffer tank, wherein the cooling unit is preferably arranged and configured to freeze an amount of water at an inner wall of the tank body, wherein the cooling unit preferably at least partially surrounds the tank body. Therefore, the cooling unit ensures that the water, circulating along the closed loop or recirculation path and being sanitized by the UV light, has such a temperature that the germs or microorganisms are prevented from growing, or at least the growth of the germs or microorganisms is limited.

The beverage preparation device may further comprise a water supply being connected with the buffer tank by a supply line for supplying water into the buffer tank, wherein the water supply is a primary water tank. Thus, the water supply may be adapted to contain an amount of water that is greater than the amount, which the buffer tank (i.e. a secondary water tank) can contain. The water supply may be detachably or integrally provided with the beverage preparation device. Therefore, a user of the device can easily remove the water supply from the device, for example in order to install a new water supply and/or in order to clean the water supply. Additionally or alternatively, the beverage preparation device may comprise a water connection. The water connection may be connected with the buffer tank by a supply line, e.g. by the before-mentioned supply line or an additional supply line. The water connection may be configured to be connectable to a water outlet, such as of a (drinking) water network.

The supply line may comprise a water filter for filtering water passing through the supply line from the water supply to the buffer tank, wherein the water filter comprises at least one of the group consisting of a particle filter, an ultrafiltration device, a nano-filtration device, an active carbon device, and a reverse osmosis device. The water filter may thus prevent that germs and/or particles promoting the formation of germs are prevented from being supplied to the buffer tank and the discharge outlet of the third delivery line. Thereby, the water purification by the beverage preparation device can be accelerated.

The beverage preparation device may comprise a beverage additive section for dispensing additives, such as in the form of a liquid or in the form of a liquid comprising solid particles, via the discharge outlet of the third delivery line. The beverage additives section is preferably arranged in a secondary discharge line connecting the buffer tank or the first delivery line (e.g. as part of a recirculation line of the closed loop) with the discharge outlet of the third delivery line to feed the beverage additives section with the water from the buffer tank.

The additives may comprise at least one of the group consisting of: flavours, aromas (for example orange, peach, lemon, etc.), minerals, a mineral liquid concentrate, a functional concentrate (such as an additive comprising a vitamin, caffeine or another coffee extract; "functional concentrate" is to be understood as having an effect on the consumer, such as a product that is probiotic, prophylactic, stimulatory, etc.), an edible flavouring concentrate, a tea and/or coffee extract, a fruit juice, a minerals mother solution or combinations thereof.

The beverage additive section is preferably adapted to dispense the additives to the water from the buffer tank such that the additives designate an amount up to 5%, preferably 0.05% to 1%, preferably 0.1% to 0.5% by volume, of the resulting liquid material in the final product.

The beverage preparation device may comprise an in-line carbonation device for entering CO2 (carbon dioxide) into the circulating water, preferably in the third delivery line or branching section, preferably at or downstream the orifice. Hence, the beverage preparation device may discharge a beverage with carbonated water (soda water, sparkling water, seltzer, or seltzer water, etc.) containing dissolved carbon dioxide gas.

The beverage preparation device may comprise an insulation housing encapsulating the buffer tank, the first delivery line, the second delivery line, the branching section and the UV lamp, and preferably also the flow rate control device, the supply line, and the water filter. The insulation housing in particular effects that heat cannot easily be transferred to the inside of the housing, thereby easily maintaining the cooling by the cooling unit.

According to a yet further aspect of the invention, a method for separating (or (re)directing) a flow via a branching section, in particular for preparing a beverage via the branching section, is provided. The branching section branches a first delivery line into a second delivery line and a third delivery line. The method comprises the steps of: delivering the water at a first flow rate via the first delivery line, the branching section and the second delivery line, thereby discharging the water via a discharge outlet of the second delivery line but not beyond a section of the third delivery line, increasing the flow rate of the water to a second flow rate at or above a defined threshold value so that the water is forced at the branching section along the third delivery line and beyond said section of the third delivery line to discharge the water at least partially via a discharge outlet of the third delivery line.

The above-mentioned advantages and description with respect to the device(s) apply analogously to the method.

The method may further comprise filling water into a buffer tank, and circulating the water at the first flow rate in a closed loop from the buffer tank via the first delivery line, the branching section and the second delivery line back into the buffer tank.

The method may further comprise sanitizing the water flowing in one or more of the first delivery line, the second delivery line and the third delivery line by UV light irradiated by a UV lamp, and/or sanitizing the water circulating water in the closed loop by UV light irradiated by a UV lamp, and after the water has been sanitized, increasing the flow rate of the water to the second flow rate at or above the defined threshold value.

The buffer tank may be automatically supplied with water via a supply line. For example, the automatic supply with water may be carried out based on one or more measured liquid levels of the buffer tank. The buffer tank may comprise a measuring or sensor unit (level sensors, etc.) for measuring/sensing a level of liquid or water in the buffer tank, wherein when the (actual) level is below a predetermined level, the buffer tank is automatically supplied with water. Additionally or alternatively, the buffer tank may be supplied with water via a (e.g. additional) supply line or the supply line on demand. On demand supplying may be carried out by a user input (e.g., an input on a button or any other user interface). Preferably, the water passing through the supply line is filtered by a water filter in the supply line.

The method may further comprise the step of cooling the water in the buffer tank by a cooling unit at least during the circulation at the first flow rate, wherein the cooling unit preferably freezes part of the water in the buffer tank at the inner wall of its tank body.

The water to be discharged via the discharge line and discharge outlet may be carbonized by in-line carbonation

### Brief description of drawings

In the following, the invention is described exemplarily with reference to the enclosed figures, in which:
- Figure 1: shows a schematic view of a flow separation device according to a preferred embodiment of the invention;
- Figure 2: shows a schematic view of an alternative orientation of the flow separation device according to the preferred embodiment of the invention;
- Figure 3: shows a schematic view of a possible use of the flow separation device according to figure 1 in a beverage preparation device.

### Detailed description

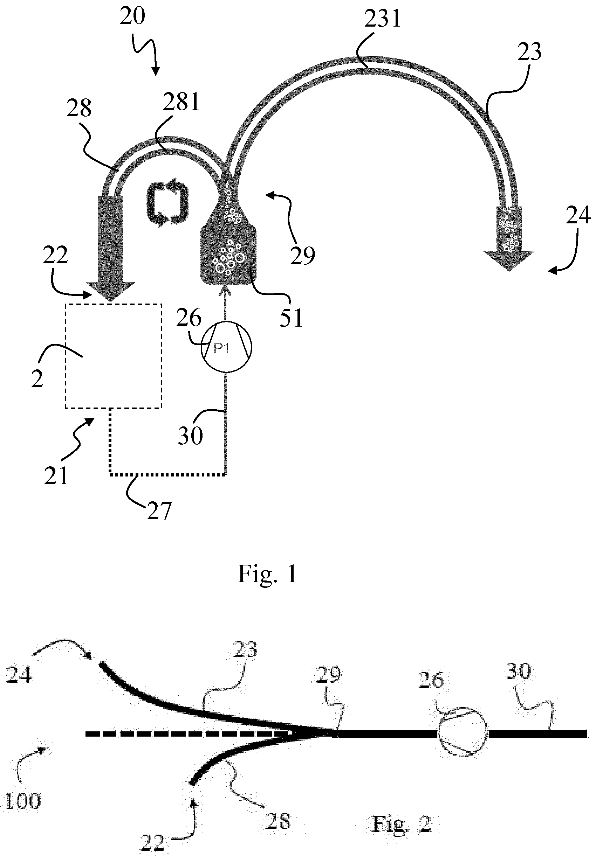

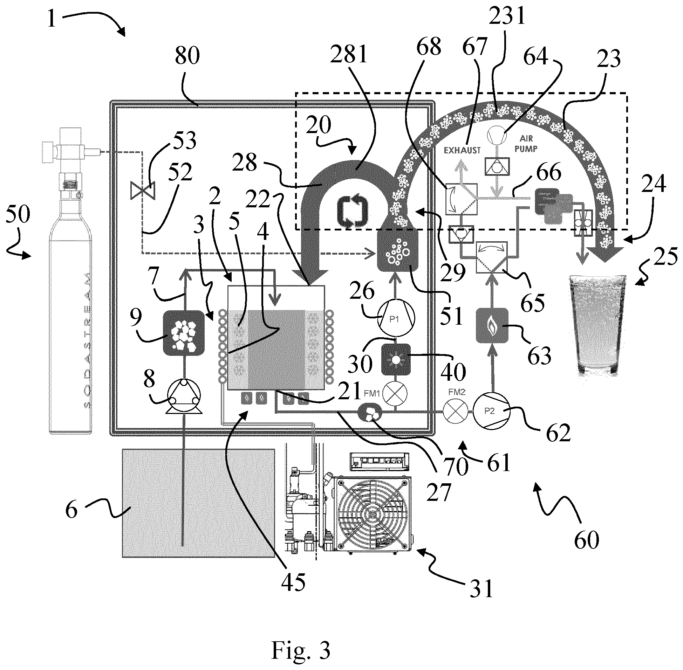

Figure 1 exemplarily shows a flow separation device (flow redirection or flow direction device) 100 according to a preferred embodiment. The flow separation device 100 may be used in many different fields, applications or devices, which require a separation and/or (re)direction of a flow of a fluid or liquid, such as water. For example, the flow separation device 100 may be used in water purification and/or sanitization and/or in the preparation of a beverage. The flow separation device 100 may be used in a beverage preparation device 1, as described below with respect to figure 3.

As can be seen in figure 1, the flow separation device 100 comprises a first delivery line 30 to drain water from a buffer tank 2. The buffer tank 2 is not an essential part of the flow separation device 100, so that in figure 1 the buffer tank 2 is shown in dashed lines. The buffer tank 2 will be described in more detail further below. The first delivery line 30 may be in fluid connection with an inlet line 27. The inlet line 27 may be provided between the buffer tank 2 and the first delivery line 30 so that water can flow from the buffer tank 2 via the inlet line 27 into the first delivery line 30. The inlet line 27 may comprise a water inlet 21, which is connectable or connected to the buffer tank 2 so that water can drain from the buffer tank 2 via the water inlet 21 into the first delivery line 30.

The flow separation device 100 further comprises a branching section 29 provided downstream the first delivery line 30. The branching section 29 branches the first delivery line 30 into a second delivery line 28 and a third delivery line 23. The second delivery line 28 leads to a discharge outlet (also referred to as "water outlet") 22. Having the optional buffer tank 2, the water drawn by the first delivery line 30 and, optionally, the inlet line 27, can be circulated back into the buffer tank 2 via the second delivery line 28 and its discharge outlet 22. The third delivery line (also referred to as "discharge line") 23 leads also to a discharge outlet 24. The discharge outlet 24 may be arranged such that water flowing through the discharge outlet 24 is discharged out of the flow separation device 100, such as in a container (e.g. a cup) positioned downstream of the discharge outlet 24 with respect to a flow from the discharge line 23 to the discharge outlet 24. The discharge outlet 24 may be arranged such that the flow of water exiting the discharge outlet 24 can (e.g. directly) exit the flow separation device 100, for example in order to directly enter a container. Such a container may be positioned on a support that is preferably positioned opposite and/or below the discharge outlet 24.

The flow separation device 100 further comprises a flow rate control device 26 for delivering water through the flow separation device 100 and for adjusting the flow rate (in particular the velocity) of the water. As shown in figure 1, the flow rate control device 26 may be provided in the first delivery line 30. The flow rate control device 26 is, however, not limited to a specific arrangement. For example, the flow rate control device 26 may be also provided in the inlet line 27. The flow rate control device 26 is not limited to a specific design as long as delivery of a water or in general liquid and the flow rate of the water or liquid can be adjusted. The flow rate control device 26 may be a pump and/or a valve and/or a tap.

The flow separation device 100 facilitates to selectively circulate water along the second delivery line 28 or the third delivery line 23 based on the flow rate of the flow rate control device 26. This is particularly effected by the specific arrangement of the second delivery line 28 and third delivery line 23. More specifically, the second delivery line 28 comprise a (first) section 281, and the third delivery line 23 comprises a (second) section 231, wherein due to the arrangement of these sections 281, 231 the redirection of the flow rate is achieved based on the flow rate of the flow rate control device 26. The sections 281, 231 are arranged such that if water is delivered by the flow rate control device 26 at a flow rate below a defined threshold value (e.g. a low flow rate such as below 100 mL/minute) the water is delivered beyond the section 281 of the second delivery line 28 but not beyond the section 231 of the third delivery line 23. Thereby, the water is discharged (only) via the discharge outlet 22 of the second delivery line 28. As such, substantially no water delivered by the flow control device 26 flows via the third delivery line 23 and through the discharge outlet 26. In other words, the water delivered by the flow rate control device 26 has, due to the set flow rate, not enough energy for flowing towards the third line 23, beyond the section 231 and out of the discharge outlet 24.

The sections 281, 231 are further arranged such that if water is delivered by the flow rate control device 26 at a flow rate at or above the defined threshold value (e.g. above 1500 mL/minute) the delivered water is at least partially delivered beyond the section 231 of the third delivery line 23. Thereby, the water is discharged at least partially via the discharge outlet 24 of the third delivery line 23. There may be still a minor part of the water delivered from the first delivery line 30 flowing through the second delivery line 28, so that at least the main part of the water delivered from the first delivery line 30 is discharged via the discharge outlet 24. It is preferred that substantially all of the water delivered from the first delivery line 30 is discharged via the discharge outlet 24. In this case, i.e. when the set flow rate is at or above the defined threshold value, the water pumped by the flow rate control device 26 has enough energy for flowing via the third delivery line 23 and towards and out of the discharge outlet 24.

The delivery lines 23, 28 are not limited to a specific design or arrangement. Preferably, the third delivery line 23 extends longer than the second delivery line 28. Thus, when seen along the (line or longitudinal) extending direction of the respective line 23, 28, the section 231 may be further distanced from the branching section 29 than the section 281 from the branching section 29. Each of the third line 23 and/or second line 28 may extend in a straight, angled or arcuate manner. When extending in an angled manner, the section comprising the angle may comprise the section 231, 281, respectively. When extending in an arcuate manner, the section comprising the arch (or bend) may comprise the section 231, 281, respectively. As can be seen in figures 1 and 2, each of the delivery lines 23, 28 preferably extends in an arcuate manner, such as in the form of a divided circle. As such, the radius of the arcuate extending third delivery line 23 may be greater than the radius of the arcuate extending second delivery line 28, such as at least 1.5 times or twice greater.

The third delivery line 23 may, compared to the second delivery line 28, reach higher with respect to the vertical. In other words, the section 231 of the third delivery line 23 may be provided at a higher level than the section 281 of the second delivery line 28. Additionally or alternatively, and as shown in figure 3, the third delivery line 23 may, compared to the second delivery line 28, reach further with respect to a direction that is (slightly) oblique to the horizontal, such as oblique with an angle in the range from 0.5-5°; in other words said direction may extend substantially in the horizontal. As shown in figure 2, the first delivery line 30 may extend substantially in the horizontal (dashed line in figure 2), wherein at least part of the second delivery line 28 (for example, a part extending from the branching section 23) extends to be oblique to the horizontal, such as oblique with said angle. Optionally, the first delivery line 30 may be also oblique to the horizontal, e.g. oblique with said angle. The oblique orientation is particularly advantageous in order to remove residual water remaining in the second delivery line 28 and/or the third delivery line 23 (and optionally also in the first delivery line 30), since the residual water can then flow by gravity out of the respective line, e.g. towards the discharge outlet 24 and/or the discharge outlet 22. In general, the first delivery line 30, the second delivery line 28, and/or the third delivery line 23 may be arranged such that, when the flow rate control device 26 does not deliver water (e.g. in an off-mode of the device 100), the residual water remaining in the respective delivery line 23, 28, 30 flows by gravity out of the respective delivery line, e.g. towards the discharge outlet 22 and/or the discharge outlet 24, thereby drying the flow separation device 100. Removing the residual water by only gravity effects that, without requiring any actively controlled or operated components, water cannot accumulate in the device 100. This particularly prevents germs from forming in the device 100.

The flow separation device 100 may include a section for entering of a substance other than by way of the first delivery line 30. For example, an orifice 51 may be arranged to connect the first delivery line 30 with the branching section 29. In other words, the orifice 51 may be arranged between the first delivery line 30 and the branching section 29. As such, a substance may enter into this orifice 51 in order to be added to the flow circulating along the second delivery line 28 or the third delivery line 23. The substance may be, for example, carbon dioxide (CO2) that may flow from an in-line carbonation device. The orifice 51 may extend straight and/or may be designed as a chamber, such as a mixing chamber. The chamber may facilitate that the substance such as the carbon dioxide effectively enters into the circulating water.

An exemplary application of the flow separation device 100 is shown in figure 3 and described in the following. As can be seen in figure 3, a beverage preparation device 1 comprises the flow separation device 100 as described above. The beverage preparation device 1 or water system may be adapted for being used by a consumer, who requests (on demand) a beverage from the beverage preparation device 1. That is, the beverage preparation device 1 may be adapted to discharge a beverage that is ready for drinking by the consumer, i.e. a ready-to-drink beverage. The beverage preparation device 1 is not limited to a specific design. Preferably, the beverage preparation device 1 is designed to be used on the side of a business (B2B) and/or on the side of a customer (B2C). For example, the beverage preparation device 1 may be designed as a vending machine (airport, mall, public area, etc.), in B2B (hotel, restaurant, café, i.e. "HoReCa", fitness center, office, etc.) and/or B2C (e.g., at home). The beverage preparation device 1 may be designed as a vending machine, a water dispenser, and/or a home appliance device. The beverage preparation device 1 may be designed for being mounted or positioned to a wall (wall-mounted), a bottom, and/or a tabletop, and/or the beverage preparation device 1 may have a freestanding design. The beverage preparation device 1 may comprise a connection for a power supply in order to supply the respective components of the beverage preparation device 1 with electrical energy.

The beverage preparation device 1 may comprise a buffer tank 2 having a tank body for storing an amount of water. The tank body comprises a bottom and a wall extending from the bottom and surrounding the amount of water stored in the tank body. The buffer tank 2 is not restricted to a specific design and/or volume. For example, the volume of the buffer tank 2, i.e. the maximum amount the buffer tank 2 can store in the tank body, is between 1 l and 3 l, preferably between 1.5 l and 2.5 l, and most preferably 1.9 l. The beverage preparation device 1 may comprise a cooling unit 3 for cooling the water within the buffer tank 2. The cooling unit 3 is not limited to a specific arrangement with respect to the buffer tank 2 as long as heat can be transferred away from the buffer tank 2 in order to cool the water within the buffer tank 2. In a preferred example, the cooling unit 3 at least partially surrounds the tank body of the buffer tank 2. The cooling unit 2 may cool the amount of water within the buffer tank 2 such that the water in at least the buffer tank 2 has a specific temperature. For example, the cooling unit 2 may be adapted to effect a temperature of the water within the buffer tank 2 of at most 4°C and preferably not below 0°C. The cooling unit 3 may be arranged and configured to freeze an amount of water at an inner wall 4 of the tank body. The inner wall 4 may be the sidewall of the tank body and/or the inner side of the sidewall of tank body. By freezing an amount of water at the inner wall 4 by the cooling unit 3, an ice layer 5 is formed. The ice layer 5 at least partially and preferably circumferentially surrounds the water within the buffer tank 2, which is not frozen.

The cooling unit 3 may comprise a compressor unit 31. The cooling unit 3 may comprise a circulating liquid refrigerant as the medium, which absorbs and removes the heat from the buffer tank 2 and, thus, from the water therein, such that the water is cooled. The compressor unit 31 is thus adapted to compress the refrigerant so that the refrigerant undergoes the phase changes for cooling. The compressor unit 31 may be at least in part provided on an outside of the beverage preparation device 1, e.g. on an outer wall of the housing of the beverage preparation device 1, so that the heat removed from the buffer tank 2 can be effectively transferred away from the beverage preparation device 1 and/or the housing.

The beverage preparation device 1 further comprises a water supply 6 being connected with the buffer tank 2 by a supply line 7 for supplying water into the buffer tank 2. The water supply 6 may be a primary water tank, so that the buffer tank 2 is a secondary water tank. The water tank 6 is preferably designed to store a greater amount of water than the buffer tank 2. For example, the amount of water, which the water supply 6 can store, is at least twice the amount of water, which the buffer tank 2 can store. In an embodiment, the water supply 6 can store between 2.5 and 5 l of water, preferably between 3 and 4.5 l, most preferably 3.8 l.

The water supply 6 may be detachably provided with respect to the beverage preparation device 1. For example, a user of the beverage preparation device 1 may detach the (e.g. empty) water supply 6 in order to subsequently attach a new (e.g., full) water supply 6 to or in the beverage preparation device 1. Additionally or alternatively, the water supply 6 may comprise a port, wherein via this port water can be filled into the water supply 6, and/or wherein this port is adapted to connect with a water network, such as with an outlet for mains water (tap water). The water supply 6 may also be integrally provided with the beverage preparation device 1. For example, the water supply 6 may comprise a part of the housing of the beverage preparation device 1 and/or may be permanently (e.g. by way of a material connection such as welding) connected to the beverage preparation device 1.

Supplying the water from the water supply 6 via the supply line 7 to the buffer tank 2 can be carried out in many different ways. For example, the beverage preparation device 1 comprises an arrangement adapted to (selectively) move (defined) amounts of water from the water supply 6 to the buffer tank 2. As shown in figure 3, the beverage preparation device 1 may comprise, for example, a pump 8 (i.e. a refilling pump), wherein the pump 8 is configured to move (i.e. pump) water from the water supply 6 via the supply line 7 into the buffer tank 2. Additionally or alternatively, the water supply 6 and buffer tank 2 may be arranged such that water is supplied or moved from the water supply 6 to the buffer tank 2 by gravity only. In this case, a valve may be provided, which is configured to selectively allow or not allow a flow of water from the water supply 6 into the buffer tank 2.

The beverage preparation device 1 may comprise a water connection (not shown). The water connection may be adapted to be connected with a water network, such as with an outlet for mains water. Via the water connection, the buffer tank 2 may be filled with water. The water connection is preferably connected to the supply line 7 so that water can enter via the water connection the supply line 7 and finally into the buffer tank 2. Preferably, the water connection is adapted so that the water supply 6 can be connected with the water connection. As such, water can be supplied from the water supply 6 via the water connection to the supply line 7.

The supply line 7 may comprise a water filter 9 for filtering water passing through the supply line 7 from the water supply 6, or from the water connection, to the buffer tank 2. The water filter 9 may be positioned downstream of the pump 8 with respect to a flow direction from the water supply 6 or pump 8 to the buffer tank 2. The water filter 9 is not limited to a specific water filter as long as the water filter 9 can prevent particles (such as germs or other particles facilitating the formation of germs) from moving into the buffer tank 2. The water filter 9 may comprise at least one of the group consisting of a particle filter, an ultrafiltration device, and nano-filtration device, an active carbon device, and a reverse osmosis device.

The buffer tank 2 may be automatically supplied with water via the supply line 7. For example, the buffer tank 2 comprises a sensor unit, which is adapted for sensing the level of the water or liquid material within the buffer tank 2. When the measured level falls below a predetermined water level, water is supplied via the supply line 7 into the buffer tank 2 at least until the predetermined level is reached; supplying of water via the supply line 7 may then stop. The sensor unit may comprise one or more sensors positioned at defined levels or heights of the buffer tank 2 so that the actual level of the water can be measured within the buffer tank 2. Additionally or alternatively, the buffer tank 2 may be supplied with water via a supply line 7 on demand. As such, a user or consumer of the beverage preparation device 1 may input a user input (e.g. for dispensing a beverage) wherein subsequently the buffer tank 2 is filled with water until a predetermined level or the before-mentioned predetermined level has been reached. The actual level of the buffer tank 2 may be measured by the sensor unit.

The beverage preparation device 1 further comprises a recirculation line 20, wherein at least the first delivery line 30, the second delivery line 28 and, preferably, the inlet line 27 form this recirculation line 20. The recirculation line 20 is configured to allow water circulating out of and back into the buffer tank 2 in order to form a recirculation path (or closed loop) together with the buffer tank 2. The recirculation path thus effects a "loop sanitization" and therefore forms a "loop sanitizer". The recirculation line 20 may comprise the water inlet 21 and the discharge outlet 22 (in the following also referred to as "water outlet"). By way of the water inlet 21 water is drawn from the buffer tank 2, wherein this drawn water can be circulated back into the buffer tank 2 via the water outlet 22. The beverage preparation device 1 further comprises the third delivery line 23 as a discharge line 23 for discharging the water from the buffer tank 2 via the discharge outlet 24. The discharge outlet 24 may be arranged such that water flowing through the discharge outlet 24 is discharged out of the beverage preparation device 1, such as in a container 25 (e.g. a cup) positioned downstream of the discharge outlet 24 with respect to a flow from the discharge line 23 to the discharge outlet 24. The discharge outlet 24 may be arranged such that the flow of water exiting the discharge outlet 24 can (e.g. directly) enter the container 25, which is, for example, positioned on a support of the beverage preparation device 1. For example, the discharge outlet 24 is positioned opposite and/or above said support.

The beverage preparation device 1 further comprises a pump (i.e. a main pump) as the flow rate control device 26 to circulate water selectively along the recirculation path (i.e. the closed loop), in particular at least along the recirculation line 20 and the buffer tank 2, or along the discharge line 23 towards the discharge outlet 24. The recirculation line 20 may comprise the inlet line 27, which may comprise the water inlet 21. The recirculation line 20 may comprise the second delivery line 28 as an outlet line, which may comprise the water outlet 22. As such, the pump 26 may circulate the water selectively towards the discharge line 23 or towards the outlet line 28 and, thus, along the recirculation path. With the flow separation device (also called "flow direction device") 100, the beverage preparation device 1 can control the flow of water circulating selectively along the recirculation path or the discharge line 23 towards the discharge outlet 24. The flow direction device therefore may facilitate that in a first configuration water is flowing substantially only towards the outlet line 28, thus circulating along the recirculation path, and not towards the discharge line 23 and discharge outlet 24. In a second configuration of the flow direction device, water is flowing substantially only or at least partially towards the discharge line 23 and discharge outlet 24, and not or with at least a reduced amount towards the outlet line 28.

Dependent on the flow rate of the pump 26 (or of any other flow rate control device), the flow of water can circulate selectively via the branching section 29 and the recirculation path or via the branching section 29 and the discharge line 23 towards the discharge outlet 24. More specifically, this may be effected as described above, e.g. by the discharge line 23 extending to a higher level (or generally further) than the recirculation line 20, in particular than the outlet line 28. As such, water pumped by the pump 26 at a flow rate below a defined threshold value (a low flow rate such as below 100 mL/minute) drains via the recirculation line 20 back into the buffer tank 2, and thus preferably not into the discharge line 23. In other words, the water pumped by the pump 26 has, due to the set flow rate, not enough energy for flowing towards the discharge line 23 and out of the discharge outlet 24. Thereby, substantially all of the water pumped by the pump 26 drains via the recirculation line 20 back into the buffer tank 2. If the pump 26 pumps the water with a flow rate at or above the defined threshold value (e.g. above 1500 mL/minute), the water flows via the discharge line 23 towards and out of the discharge outlet 24. In this case, the water pumped by the pump 26 has enough energy for flowing via the discharge line 23 and towards and out of the discharge outlet 24.

If water is delivered by the pump 26 at the flow rate below a defined threshold value, the water is delivered beyond the section 281 of the outlet line 28 (e.g. its highest section) but not beyond the section 231 of the discharge line 23 (e.g. a section being higher than the section 281 of the outlet line 28). Thereby, water is discharged via the outlet 22 of the outlet line 28 into the buffer tank 2 and, thus, the water circulates (continuously) along the recirculation path (i.e. the closed loop) for sanitization. If the water is delivered by the pump 26 at the flow rate at or above the defined threshold value, the water is at least partially (preferably only) delivered beyond the section 231 of the discharge line 23 to be discharged via the discharge outlet 24. The flow rate at or above the defined threshold value may thus be set when the water is purified and ready to drink.

With such an arrangement it is thus facilitated that only dependent on the energy of the flow of the water, which particularly depends on the flow rate and in particular on the velocity of the flow, e.g. set by the pump 26 or any other flow rate control device, the (pumped) flow of water can be redirected, i.e. selectively along the recirculation path (in particular the recirculation line 20 and/or the outlet line 28) or the discharge line 23. In other words, the flow separation or (re)direction device constituted by the branching section 29, the second delivery line (outlet line 28) and the third delivery line (discharge line 23) form a passive arrangement (component). That is, the flow separation device forming the passive arrangement is not required to be actively controlled or manipulated in order to redirect the flow as described above.

As mentioned before, the discharge line 23 may, compared to the recirculation line 20 (in particular to the outlet line 28), reach higher with respect to the vertical. Additionally or alternatively, the discharge line 23 may, compared to the recirculation line 20 (in particular to the outlet line 28) reach further with respect to a direction that is (slightly) oblique to the horizontal, such as oblique with an angle in the range from 0.5-5°; in other words said direction may extend substantially in the horizontal. This is particularly advantageous in order to remove residual water remaining in the recirculation line 20 and/or discharge line 23, since the residual water can then flow by gravity out of the respective line, e.g. towards the discharge outlet 24 and/or the outlet 22.

The flow separation device 100 or the beverage preparation device 1 may comprise, in addition or as an alternative to the before-mentioned branching with the branching section 29, a two-way valve, and/or a three-way valve. Having the valve may facilitate that the pump 26 (as an exemplary flow rate control device) is operated with only one flow rate, when redirection of the flow of water in the discharge line 23 or the recirculation path (e.g. the recirculation line 20 or the outlet line 28) is required. As such, the respective redirection to the recirculation path or the discharge line 23 may be effected by the valve only. Hence, the control of the pump 26 can be simplified. When the valve is provided in addition to the pump 26 being operated at different flow rates to selectively circulate the flow of water along the recirculation path or the discharge line 23, the valve may in particular effect that substantially no water circulates along the recirculation path, when the flow of water circulates along the discharge line 23, and/or that substantially no water circulates along the discharge line 23, when the flow of water circulates along the recirculation path.

Adjusting the flow rate of the water is not limited to the adjustment by the pump 26 as a flow rate control device. For example, the flow rate of the water may be also adjusted by any other flow rate control device. For example, the flow rate of the water may be also adjusted by a valve and/or a tab and/or a faucet. The flow rate control device such as the pump 26 is not limited to be positioned in a specific arrangement as long as the flow rate control device can selectively circulate water along the recirculation path or the discharge line 23. As shown in figure 1, the flow rate control device, in this case the pump 26, may be arranged in the delivery line 30 and/or upstream of the branching section 29, e.g. with respect to a flow from the inlet 21 to the branching section 29.

The beverage preparation device 1 may further comprise a UV lamp 40 arranged for irradiating UV light at the position along the recirculation path (i.e. within the closed loop) to sanitize the water. Sanitizing water with UV light may be also called ultraviolet germicidal irradiation (UVGI). More specifically, the irradiating UV light (short-wavelength ultraviolet, UV-C) kills or inactivates the germs by destroying structures of the germs, such as nucleid acis, leaving the germs unable to produce a disease. In particular, the UV light kills or inactivates germs such as microorganisms by destroying biomolecules such as nucleid acids and disrupting their DNA, leaving them unable to perform vital cellular functions. Consequently, germs in the water can be eliminated or at least significantly reduced, thereby sanitizing and purifying the water. The wavelengths of the irradiated UV light may be short-wavelength UV (UVC; "germicidal UV") and/or may be in the range from about 200 nm to 300 nm. These wavelengths are strongly absorbed by the germs/nucleic acids, wherein the absorbed energy results in defects of the germs, including, for example, pyrimidine dimers. These dimers can prevent replication or can prevent the expression of necessary proteins, resulting in the death or inactivation of the organism of the germ. The UV lamp 40 may comprise a light source arranged for emitting (irradiating) the UV light. For example, the UV lamp 40 comprises a Mercury based lamp, ultraviolet light-emitting diodes, and/or a pulsed-xenon lamp.

In general, the UV lamp 40 may be arranged at any position suitable for sanitizing the water, which is to be discharged via the discharge outlet 24, by the irradiated UV light. For example, the UV lamp 40 may be arranged to irradiate UV light into the recirculation path, the recirculation line 20 and/or into the buffer tank 2. Being positioned to irradiate UV light into the recirculation line 20, the UV lamp 40 may be, for example, arranged to irradiate UV light into one or more of the inlet line 27, delivery line 30, branching section 29, and/or outlet line 28. The UV lamp 40 may be also arranged to irradiate UV light into the discharge line 23. The UV lamp 40 may be a single UV lamp or may comprise a plurality of UV lamps, wherein each of these UV lamps is arranged to irradiate UV light into a respective one of the lines 20, 27, 30, 28 or the buffer tank 2.

In addition to the filter 9 of the supply line 7 for filtering water passing through the supply line 7 from the water supply 6 to the buffer tank 2, the beverage preparation device 1 may further comprise a second filter 70 along the recirculation path to sanitize the water on the inlet line 27 (as presented on figure 3) or on the delivery line 30 as an alternative. In any case the filter 70 is positioned before the UV lamp 40 to apply a filtering to the water and eliminated any particles (such as germs or other particles facilitating the formation of germs) from moving into the recirculation line 20 of the loop sanitizer. The water filter may comprise at least one of the group consisting of a particle filter, an ultrafiltration device, and nano-filtration device, an active carbon device, and a reverse osmosis device.

According to the arrangement of the beverage preparation device 1, water can circulate along the recirculation path (closed loop) extending from the buffer tank 2 via the recirculation line 20 and back to the buffer tank 2. Hence, this makes it possible that a certain amount or batch of water circulates along the recirculation path (in the beverage preparation device 1) and is sanitized by the UV light irradiated by the UV lamp 40 until the amount of germs (viruses, bacteria, fungi, etc.) in this amount of water goes below a certain value, i.e. until this amount of water has been properly sanitized. For example, the beverage preparation device 1 is configured to circulate the amount of water along the recirculation path for a time that is dependent on the amount of water stored in the buffer tank 2, wherein said amount of water is preferably measured by the beverage preparation device 1. The beverage preparation device 1 may also circulate the amount of water along the recirculation path for a fixed time, which fixed time is sufficient to properly sanitize all amounts of water which can circulate along the recirculation path and/or which can be stored in the buffer tank 2. Additionally, the water is cooled in the buffer tank 2 by the cooling unit 3. With the cooling unit 3, it is, therefore, at the same time ensured that the water, circulating along the recirculation path and being sanitized by the UV light, has such a temperature that the germs or microorganisms are prevented from growing, or at least the growth of the germs or microorganisms is limited. In other words, the germs or microorganisms are both killed (and inactivated) and, due to the cooling, at the same time prevented from forming/growing. Therefore, a very efficient purification of the water is achieved.

Preferably, the beverage preparation device 1 comprises a heating unit or boiler 45. This heating unit 45 is arranged to transfer heat to the buffer tank 2 in order to sanitize the water within the buffer tank 2. For example, in an idle state of the beverage preparation device 1, the heating unit 45 is activated, thereby transferring heat into the buffer tank 2 for sanitization. As such, it can be ensured that germs - which may remain in the buffer tank 2 and/or which may not be reached by the UV light irradiated by the UV lamp 40 and/or which cannot flow out of the buffer tank 2 due to the water flow along the recirculation path - can be inactivated or destroyed. The heating unit 45 may be arranged to operate only in the idle mode of the beverage preparation device 1 (i.e. when the beverage preparation device 1 is not cooling and/or not ready for dispensing a beverage). In other words, the heating unit 45 may be arranged to be always deactivated when the beverage preparation device 1 is in an operation mode (i.e. when beverage preparation device 1 is cooling and ready for dispensing a beverage, e.g. when the UV lamp 40, the cooling unit 3, and/or the pump 26 are activated). The heating unit 45 may be arranged to melt the ice layer 5. Since germs may accumulate on the ice layer 5, melting the ice layer 5 may further improve the sanitization of the water.

The beverage preparation device 1 may further comprise an in-line carbonation device 50. The in-line carbonation device 50 is adapted for entering carbon dioxide (CO2) into the circulating water. For example, the carbon dioxide may enter into the circulating water in the discharge line 23 and/or the flow direction device. As can be seen in figure 1, the carbon dioxide may enter into the circulating water at the branching section 29. As such, the carbon dioxide from the in-line carbonation device 50 may enter into this orifice 51. The orifice 51 designed as a chamber may facilitate that the carbon dioxide effectively enters into the circulating water. A carbon dioxide line 52 may be arranged to connect the in-line carbonation device 50 with the circulating water, for example with the recirculation path (e.g. the orifice 51) or discharge line 23 so that the carbon dioxide can enter into the circulating water. In the carbon dioxide line 52, a valve 53 (e.g. an on/off valve) may be arranged to selectively enter carbon dioxide into the circulating water.

In the preferred embodiment shown in figure 3, the beverage preparation device 1 further comprises a beverage additive section 60 for dispensing additives via the discharge outlet 24. The beverage additive section 60 may add the additives at a position downstream of the branching section 29 with respect to a flow direction from the branching section 29 via the discharge line 23 and to the discharge outlet 24. With respect to this flow direction, the beverage additive section 60 may add the additives at a position upstream or downstream of the discharge outlet 24, or at the discharge outlet 24.

The beverage additive section 60 may be arranged to dispense only additives and/or to add the additives to water so that the additives provided in the water are subsequently dispensed by the discharge outlet 24 and added to or mixed with the water discharged from the discharge line 23. The beverage additive section 60 may add the additives to (purified) water from the buffer tank 2 or recirculation path 20. For example, the beverage preparation device 1 comprises a further (secondary) discharge line 61, which connects the buffer tank 2 or the recirculation line 20 with the discharge outlet 24. As can be seen in figure 1, the inlet line 27 of the recirculation line 20 may branch into the delivery line 30 and the secondary discharge line 61. As such, the water flowing in the inlet line 27 flows both in the delivery line 30 and the secondary discharge line 61. One or more valves may be provided to accordingly control the water flowing through the (primary) discharge line 23 and secondary discharge line 61. The one or more valves may be, in particular, adapted to control the flow rate in each of the primary discharge line 23 and secondary discharge line 61, and/or to allow and stop the flow along the secondary discharge line 61.

The beverage additive section 60 may dispense the additives via the discharge outlet 24 automatically or on demand, for example in response to a user input (on a user interface such as a button or touch screen). Dispensing of the additives may be carried out by a dedicated dispensing unit, which is adapted to dispense the required amounts of the additive(s) for the final product. As can be seen in figure 1, the beverage additive section 60 may comprise a pump 62 (e.g. an infusion pump), which is adapted to pump water from the buffer tank 2 or recirculation line 20 into the secondary discharge line 61, e.g. at a flow rate of 0.2 L/min. The additives are added to this pumped water for being subsequently dispensed via the discharge outlet 24. The beverage additive section 60 may also comprise a heating unit or boiler 63 in order to heat the pumped water, wherein the additives are, preferably subsequently, added to this heated water. As such, the additives may further develop in the heated water, for example with respect to the function of the additive and/or the taste of the additive, e.g. by effecting a chemical reaction such as extraction or infusion. The heating unit 63 may be arranged downstream of the pump 62 and upstream of a section, where the additives are added, with respect to the flow direction of the pump 62.

The beverage additive section 60 may be adapted to inject air into the additive and/or the water of the secondary discharge line 62, to which the additive is added. For example, the beverage additive section 61 comprises an air pump 64 for said injection of air. The beverage additive section 60 may thus be operable in a first mode and a second mode, wherein in the first mode air injection is carried out/activated, wherein in the second mode air injection is not carried out/deactivated. For moving the beverage additive section 60 between these two modes, the beverage additive section 60 may comprise a valve 65 such as a (two-) way valve. In a first position of the valve 65, the flow of water flowing from the secondary discharge line 61 is flowing to an air injection line 66, in which air is injected into the water, e.g. by means of the air pump 64. The air injected water is then flowing to a section, where the additives are added to the air injected water. In a second position of the valve 65, the flow of water flowing from the secondary discharge line 61 is flowing directly to the section, where the additives are added to the water, which has consequently no air injected therein.

The beverage additive section 60 may comprise an exhaust port 67, which is adapted for exhausting air out of the beverage additive section 60. The exhausted air may be, for example, air that remains in the beverage additive section 60 without having being injected into the water. The exhaust port 67 may be selectively moved between an open (exhaust) position and a closed position, e.g. by way of a (two-) way valve 68.

The additive may be in the form of a liquid or in the form of a liquid, which comprises solid (additive) particles. The additive may be provided in a dedicated container (a cartridge, a capsule, etc.) that may be detachably connected to and/or may be adapted to be removed from the beverage additive section 60. Dependent on the consumer's desire, one and the same device 1 can thus be equipped with different kinds of additives. For example, the beverage preparation device 1 may be adapted to choose among a plurality of additives. The additives may be added to provide infused water. For example, the additives comprise at least one of the group consisting of: flavours, aromas (for example orange, peach, lemon, etc.), minerals, a mineral liquid concentrate, a functional concentrate (such as an additive comprising a vitamin, caffeine or another coffee extract), an edible flavouring concentrate, a tea and/or coffee extract, a fruit juice, a minerals mother solution or combinations thereof. A "functional concentrate" is to be understood as having an effect on the consumer, such as a product that is probiotic, prophylactic, etc. The beverage additive section 60 is preferably adapted to dispense the additives to the water from the buffer tank 2 (e.g. coming from the primary discharge line 23 and/or the secondary discharge line 61) such that the additives designate an amount up to 5%, preferably 0.05% to 1%, preferably 0.1% to 0.5% by volume, of the resulting liquid material in the final (beverage) product. In general, the final product may be (pure) water, soda, lemonade, a soup, etc.

The beverage preparation device 1 may further comprise an insulation housing 80 encapsulating (in an isolating manner) the buffer tank 2, the cooling unit 3, the UV lamp 40 and the recirculation line 20. The insulation housing 80 may also encapsulate the pump 26, at least a part of the flow separation device 100 (in particular the branching section 29 and/or the second delivery line 28, preferably also part of the third delivery line 23), the supply line 7, and the water filter 9; if present, also the pump 8 may be encapsulated by the housing 80. The housing 80 may not encapsulate the water supply 6, the compressor unit 31, the in-line carbonation device 50, the beverage additive section 60, and/or at least a part of the discharge line 23 and discharge outlet 24. That is, one or more of the parts of the beverage preparation device 1 may be provided on an outside with respect to the housing 80. As such, a very compact design of the beverage preparation device 1 is achieved, while at the same time efficient cooling of the water to be dispensed out of the device 1 or housing 80 is effected. The housing 80 may thus form a temperature isolated area.

It should be clear to a skilled person that the embodiments shown in the figures are only preferred embodiments, but that, however, also other designs of a flow separation device 100 and beverage preparation device 1 can be used. In general, a "line" is to be understood in a broad manner, i.e. any structure adapted for conveying, guiding and/or moving a liquid or fluid. For example, a "line" may be a tube, a pipe, a channel, or a conduit. Further, the buffer tank 2 is not limited for storing an amount of water only. For example, the buffer tank 2, i.e. its tank body, may also be adapted to store an amount of soda, lemonade, soup, etc.; in other words, the buffer tank 2 may be adapted to store a liquid material, which comprises, besides the amount of water, other ingredients, resulting in compositions such as soda, lemonade, soup, etc.

## Claims

1. Beverage preparation device (1) comprising a flow separation device (100), wherein the flow separation device (100) comprises:
- a first delivery line (30) to drain water from a buffer tank (2),
- a branching section (29) provided downstream the first delivery line (30), wherein the branching section (29) branches the first delivery line (30) into a second delivery line (28) and a third delivery line (23), each of the second and third delivery line (28, 23) leading to a respective discharge outlet (22, 24), and
- a flow rate control device (26) for delivering water through the flow separation device (100) and for adjusting the flow rate of the water,
wherein only the flow rate control device must be operated or used for selectively circulating the water along the second delivery line (28) or third delivery line (23) and towards the respective discharge outlet (22, 24),
wherein each of the second delivery line (28) and third delivery line (23) comprises a respective section (281; 231), wherein said sections (281, 231) are arranged such that
o if water is delivered by the flow rate control device (26) at a flow rate below a defined threshold value the water is delivered beyond the section (281) of the second delivery line (28) but not beyond the section (231) of the third delivery line (23), thereby discharging the water via the discharge outlet (22) of the second delivery line (28), and
if water is delivered by the flow rate control device (26) at a flow rate at or above the defined threshold value the water is at least partially delivered beyond the section (231) of the third delivery line (23), thereby discharging the water at least partially via the discharge outlet (24) of the third delivery line (23).

2. Beverage preparation device (1) according to claim 1, wherein, compared to the second delivery line (28), the third delivery line (23) extends longer and/or, with respect to the vertical, reaches higher.

3. Beverage preparation device (1) according to claim 1 or 2, wherein, compared to the second delivery line (28), the third delivery line (23) reaches further with respect to a direction that is oblique to the horizontal, such as oblique with an angle in the range from 0.5 to 5 degree.

4. Beverage preparation device (1) according to any one of the preceding claims, wherein the first delivery line (30), the second delivery line (28), and/or the third delivery line (23) are arranged such that, when the flow rate control device (26) does not deliver water, the residual water remaining in the respective delivery line (23, 28, 30) flows by gravity out of the respective delivery line (23, 28, 30), e.g. towards the discharge outlet (22) of the second delivery line (28) and/or the discharge outlet (24) of the third delivery line (23).

5. Beverage preparation device (1) according to any one of the preceding claims, wherein an orifice (51) is provided between the first delivery line (30) and the branching section (29), the orifice (51) preferably extending straight towards the third delivery line (23).

6. Beverage preparation device (1) according to any one of the preceding claims, wherein the flow rate control device (26) is provided in the first delivery line (30) and/or the flow rate control device (26) is a pump or a valve or a tap.

7. Beverage preparation device (1) according to any one of the preceding claims, further comprising
- a buffer tank (2) having a tank body for storing an amount of water, wherein the first delivery line (30) is arranged to drain water from the buffer tank (2), and wherein the second delivery line (28) leads via its discharge outlet (22) back into the buffer tank (2) thus forming a closed loop,
- a UV lamp (40) for UV light treatment of water within the closed loop, and
- wherein the flow rate control device (26) is arranged to deliver water through the beverage preparation device (1).

8. Beverage preparation device (1) according to claim 7, wherein the UV lamp (40) is arranged to irradiate UV light into the buffer tank (2) and/or into the first delivery line (30) and/or into the second delivery line (28).

9. Beverage preparation device (1) according to claim 7 or 8, further comprising one or more of:
- a cooling unit (3) for cooling the water within the buffer tank (2), wherein the cooling unit (3) is preferably arranged and configured to freeze an amount of water at an inner wall (4) of the tank body, wherein the cooling unit (3) preferably at least partially surrounds the tank body;
- a water supply (6) being connected with the buffer tank (2) by a supply line (7) for supplying water into the buffer tank (2), wherein the water supply (6) is a primary water tank being preferably detachably or integrally provided;
- an in-line carbonation device (50) for entering CO2 into the circulating water, preferably in the third delivery line (23) or branching section (29), preferably at or downstream an or the orifice (51);
- an insulation housing (80) encapsulating the buffer tank (2), the first delivery line (30), the second delivery line (28), the branching section (29) and an UV lamp (40), and preferably also the flow rate control device (26), the supply line (7), and a water filter (9).

10. Beverage preparation device (1) according to claim 9, wherein the supply line (7) comprises the water filter (9) for filtering water passing through the supply line (7) from the water supply (6) to the buffer tank (2), wherein the water filter (9) comprises at least one of the group consisting of a particle filter, an ultrafiltration device, a nano-filtration device, an active carbon device, and a reverse osmosis device.

11. Beverage preparation device (1) according to any one of claims 7 to 10, further comprising a beverage additive section (60) for dispensing additives, such as in the form of a liquid or in the form of a liquid comprising solid particles, via the discharge outlet (24) of the third delivery line (23), wherein the beverage additives section (60) is preferably arranged in a secondary discharge line (61) connecting the buffer tank (2) or the first delivery line (30), e.g. as part of a recirculation line (20) for forming a closed loop, with the discharge outlet (24) of the third delivery line (23) to feed the beverage additives section (60) with the water from the buffer tank (2), and
wherein the additives preferably comprises at least one of the group consisting of: flavours, aromas, minerals, a mineral liquid concentrate, a functional concentrate, an edible flavouring concentrate, a tea and/or coffee extract, a fruit juice, a minerals mother solution or combinations thereof,
wherein the beverage additive section (60) is preferably adapted to dispense the additives to the water from a buffer tank (2) such that the additives designate an amount up to 5%, preferably 0.05% to 1%, preferably 0.1% to 0.5% by volume, of the resulting liquid material in the final product.

12. Method for separating a flow via a branching section (29) for preparing a beverage via the branching section (29), wherein the branching section (29) branches a first delivery line (30) into a second delivery line (28) and a third delivery line (23), wherein only a flow rate control device (26) is operated for selectively circulating water along the second delivery line (28) or third delivery line (23) and towards a respective discharge outlet (22, 24), wherein it comprising the steps of:
- delivering the water at a first flow rate via the first delivery line (30), the branching section (29) and the second delivery line (28), thereby discharging the water via a discharge outlet (22) of the second delivery line (28) but not beyond a section (231) of the third delivery line (23),
- increasing the flow rate of the water to a second flow rate at or above a defined threshold value so that the water is forced at the branching section (29) along the third delivery line (23) and beyond said section (231) of the third delivery line (23) to discharge the water at least partially via a discharge outlet (24) of the third delivery line (23).

13. Method according to claim 12, further comprising the following steps:
- filling water into a buffer tank (2),
- circulating the water at the first flow rate in a closed loop from the buffer tank (2) via the first delivery line (30), the branching section (29) and the second delivery line (28) back into the buffer tank (2),
- cooling the water in the buffer tank (2) by a cooling unit (3) at least during the circulation at the first flow rate, wherein the cooling unit (3) preferably freezes part of the water in the buffer tank (2) at the inner wall (4) of its tank body,
- sanitizing the water flowing in one or more of the first delivery line (30), the second delivery line (28) and the third delivery line (23) by UV light irradiated by a UV lamp (40), and/or sanitizing the water circulating water in the closed loop by UV light irradiated by a UV lamp (40), and
- after the water has been sanitized, increasing the flow rate of the water to the second flow rate at or above the defined threshold value.

14. Method according to claim 12 or 13, wherein the buffer tank (2) is supplied with water, automatically or on demand, via a supply line (7), wherein preferably the water passing through the supply line (7) is filtered by a water filter (9) in the supply line (7).

15. Method according to any one of claims 12 to 14, wherein the water to be discharged via the third delivery line (23) and the respective discharge outlet (24) is carbonized by in-line carbonation.

## Patentansprüche

1. Getränkezubereitungsvorrichtung (1), umfassend eine Strömungsvereinzelungsvorrichtung (100), wobei die Strömungsvereinzelungsvorrichtung (100) umfasst:
- eine erste Abgabeleitung (30) zum Ableiten von Wasser aus einem Puffertank (2),
- einen Verzweigungsabschnitt (29), der stromabwärts der ersten Abgabeleitung (30) bereitgestellt ist, wobei der Verzweigungsabschnitt (29) die erste Abgabeleitung (30) in eine zweite Abgabeleitung (28) und eine dritte Abgabeleitung (23) verzweigt, wobei jede der zweiten und der dritten Abgabeleitung (28, 23) zu einem jeweiligen Auslaufauslass (22, 24) führt, und
- eine Strömungsgeschwindigkeitssteuervorrichtung (26) zum Abgeben von Wasser durch die Strömungsvereinzelungsvorrichtung (100) und zum Einstellen der Strömungsgeschwindigkeit des Wassers,
wobei nur die Strömungsgeschwindigkeitssteuervorrichtung zum selektiven Zirkulierenlassen des Wassers entlang der zweiten Abgabeleitung (28) oder der dritten Abgabeleitung (23) und in Richtung des jeweiligen Auslaufauslasses (22, 24) betrieben oder verwendet werden darf,
wobei jede der zweiten Abgabeleitung (28) und der dritten Abgabeleitung (23) einen jeweiligen Abschnitt (281; 231) umfasst, wobei die Abschnitte (281, 231) so angeordnet sind, dass
∘ wenn Wasser durch die Strömungsgeschwindigkeitssteuervorrichtung (26) bei einer Strömungsgeschwindigkeit unter einem definierten Grenzwert abgegeben wird, das Wasser über den Abschnitt (281) der zweiten Abgabeleitung (28) hinaus, aber nicht über den Abschnitt (231) der dritten Abgabeleitung (23) hinaus abgegeben wird, wodurch das Wasser über den Auslaufauslass (22) der zweiten Abgabeleitung (28) abgelassen wird, und
wenn Wasser durch die Strömungsgeschwindigkeitssteuervorrichtung (26) bei einer Strömungsgeschwindigkeit bei oder über dem definierten Grenzwert abgegeben wird, das Wasser mindestens teilweise über den Abschnitt (231) der dritten Abgabeleitung (23) hinaus abgegeben wird, wodurch das Wasser mindestens teilweise über den Auslaufauslass (24) der dritten Abgabeleitung (23) abgelassen wird.

2. Getränkezubereitungsvorrichtung (1) nach Anspruch 1, wobei sich die dritte Abgabeleitung (23) im Vergleich zu der zweiten Abgabeleitung (28) länger erstreckt und/oder in Bezug auf die Vertikale höher reicht.

3. Getränkezubereitungsvorrichtung (1) nach Anspruch 1 oder 2, wobei die dritte Abgabeleitung (23) im Vergleich zu der zweiten Abgabeleitung (28) in Bezug auf eine Richtung, die schräg zu der Horizontalen verläuft, weiter reicht, wie z. B. schräg mit einem Winkel im Bereich von 0,5 bis 5 Grad.

4. Getränkezubereitungsvorrichtung (1) nach einem der vorstehenden Ansprüche, wobei die erste Abgabeleitung (30), die zweite Abgabeleitung (28) und/oder die dritte Abgabeleitung (23) so angeordnet sind, dass, wenn die Strömungsgeschwindigkeitssteuervorrichtung (26) kein Wasser abgibt, das in der jeweiligen Abgabeleitung (23, 28, 30) verbleibende Restwasser durch Schwerkraft aus der jeweiligen Abgabeleitung (23, 28, 30) fließt, z. B. in Richtung des Auslaufauslasses (22) der zweiten Abgabeleitung (28) und/oder des Auslaufauslasses (24) der dritten Abgabeleitung (23).

5. Getränkezubereitungsvorrichtung (1) nach einem der vorstehenden Ansprüche, wobei eine Öffnung (51) zwischen der ersten Abgabeleitung (30) und dem Verzweigungsabschnitt (29) bereitgestellt ist, wobei sich die Öffnung (51) vorzugsweise gerade in Richtung der dritten Abgabeleitung (23) erstreckt.

6. Getränkezubereitungsvorrichtung (1) nach einem der vorstehenden Ansprüche, wobei die Strömungsgeschwindigkeitssteuervorrichtung (26) in der ersten Abgabeleitung (30) bereitgestellt ist und/oder die Strömungsgeschwindigkeitssteuervorrichtung (26) eine Pumpe oder ein Ventil oder ein Hahn ist.

7. Getränkezubereitungsvorrichtung (1) nach einem der vorstehenden Ansprüche, ferner umfassend
- einen Puffertank (2) mit einem Tankkörper zum Speichern einer Wassermenge, wobei die erste Abgabeleitung (30) angeordnet ist, um Wasser aus dem Puffertank (2) abzuleiten, und wobei die zweite Abgabeleitung (28) über ihren Auslaufauslass (22) zurück in den Puffertank (2) führt und so einen geschlossenen Kreislauf bildet,
- eine UV-Lampe (40) zur UV-Licht-Behandlung von Wasser innerhalb des geschlossenen Kreislaufs, und
- wobei die Strömungsgeschwindigkeitssteuervorrichtung (26) angeordnet ist, um Wasser durch die Getränkezubereitungsvorrichtung (1) abzugeben.

8. Getränkezubereitungsvorrichtung (1) nach Anspruch 7, wobei die UV-Lampe (40) angeordnet ist, um UV-Licht in den Puffertank (2) und/oder in die erste Abgabeleitung (30) und/oder in die zweite Abgabeleitung (28) einzustrahlen.

9. Getränkezubereitungsvorrichtung (1) nach Anspruch 7 oder 8, ferner umfassend eines oder mehrere von:
- einer Kühleinheit (3) zum Kühlen des Wassers innerhalb des Puffertanks (2), wobei die Kühleinheit (3) vorzugsweise angeordnet und konfiguriert ist, um eine Wassermenge an einer Innenwand (4) des Tankkörpers einfrieren zu lassen, wobei die Kühleinheit (3) vorzugsweise den Tankkörper mindestens teilweise umgibt;
- einer Wasserzufuhr (6), die mit dem Puffertank (2) über eine Zufuhrleitung (7) zum Zuführen von Wasser in den Puffertank (2) verbunden ist, wobei die Wasserzufuhr (6) ein primärer Wassertank ist, der vorzugsweise abnehmbar oder einstückig bereitgestellt ist;
- einer Inline-Karbonisierungsvorrichtung (50) zum Einleiten von CO2 in das zirkulierende Wasser, vorzugsweise in der dritten Abgabeleitung (23) oder dem Verzweigungsabschnitt (29), vorzugsweise an der oder stromabwärts einer Öffnung (51);
- einem Isoliergehäuse (80), das den Puffertank (2), die erste Abgabeleitung (30), die zweite Abgabeleitung (28), den Verzweigungsabschnitt (29) und eine UV-Lampe (40) und vorzugsweise auch die Strömungsgeschwindigkeitssteuervorrichtung (26), die Zufuhrleitung (7) und einen Wasserfilter (9) einkapselt.

10. Getränkezubereitungsvorrichtung (1) nach Anspruch 9, wobei die Zufuhrleitung (7) den Wasserfilter (9) zum Filtern von Wasser umfasst, das durch die Zufuhrleitung (7) von der Wasserzufuhr (6) zu dem Puffertank (2) strömt, wobei der Wasserfilter (9) mindestens eines aus der Gruppe umfasst, bestehend aus einem Partikelfilter, einer Ultrafiltrationsvorrichtung, einer Nanofiltrationsvorrichtung, einer Aktivkohlevorrichtung und einer Umkehrosmosevorrichtung.

11. Getränkezubereitungsvorrichtung (1) nach einem der Ansprüche 7 bis 10, ferner umfassend einen Getränkezusatzstoffabschnitt (60) zum Ausgeben von Zusatzstoffen, wie z. B. in Form einer Flüssigkeit oder in Form einer Flüssigkeit, umfassend feste Partikel, über den Auslaufauslass (24) der dritten Abgabeleitung (23), wobei der Getränkezusatzstoffabschnitt (60) vorzugsweise in einer sekundären Abgabeleitung (61) angeordnet ist, die den Puffertank (2) oder die erste Abgabeleitung (30) anschließt, z. B.
als Teil einer Rezirkulationsleitung (20) zur Bildung eines geschlossenen Kreislaufs, mit dem Auslaufauslass (24) der dritten Abgabeleitung (23), um den Getränkezusatzabschnitt (60) mit dem Wasser aus dem Puffertank (2) zu speisen, und
wobei die Zusatzstoffe vorzugsweise mindestens eines aus der Gruppe umfasst, bestehend aus: Geschmacksstoffen, Aromen, Mineralien, einem flüssigen Mineralkonzentrat, einem funktionellen Konzentrat, einem essbaren Aromakonzentrat, einem Tee- und/oder Kaffee-Extrakt, einem Fruchtsaft, einer Mineralien-Mutterlösung oder Kombinationen davon,
wobei der Getränkezusatzabschnitt (60) vorzugsweise eingerichtet ist, um die Zusätze aus einem Puffertank (2) an das Wasser auszugeben, sodass die Zusätze eine Menge von bis zu 5 Vol.-%, vorzugsweise 0,05 Vol.-% bis 1 Vol.-%, vorzugsweise 0,1 Vol.-% bis 0,5 Vol.-%, des resultierenden flüssigen Materials in dem Endprodukt ausmachen.

12. Verfahren zum Vereinzeln eines Stroms über einen Verzweigungsabschnitt (29) zum Zubereiten eines Getränks über den Verzweigungsabschnitt (29), wobei der Verzweigungsabschnitt (29) eine erste Abgabeleitung (30) in eine zweite Abgabeleitung (28) und eine dritte Abgabeleitung (23) verzweigt, wobei nur eine Strömungsgeschwindigkeitssteuervorrichtung (26) betrieben wird, um selektiv Wasser entlang der zweiten Abgabeleitung (28) oder dritten Abgabeleitung (23) und in Richtung eines jeweiligen Auslaufauslasses (22, 24) zirkulieren zu lassen, wobei umfassend die Schritte:
- Abgeben des Wassers bei einer ersten Strömungsgeschwindigkeit über die erste Abgabeleitung (30), den Verzweigungsabschnitt (29) und die zweite Abgabeleitung (28), wodurch das Wasser über einen Auslaufauslass (22) der zweiten Abgabeleitung (28), jedoch nicht über einen Abschnitt (231) der dritten Abgabeleitung (23) hinaus abgegeben wird,
- Erhöhen der Strömungsgeschwindigkeit des Wassers auf eine zweite Strömungsgeschwindigkeit bei einem oder über einem definierten Grenzwert, sodass das Wasser an dem Verzweigungsabschnitt (29) entlang der dritten Abgabeleitung (23) und über den Abschnitt (231) der dritten Abgabeleitung (23) hinaus gedrückt wird, um das Wasser mindestens teilweise über einen Auslaufauslass (24) der dritten Abgabeleitung (23) abzulassen.

13. Verfahren nach Anspruch 12, ferner umfassend die folgenden Schritte:
- Einfüllen von Wasser in einen Puffertank (2),
- Zirkulierenlassen des Wassers bei der ersten Strömungsgeschwindigkeit in einem geschlossenen Kreislauf aus dem Puffertank (2) über die erste Abgabeleitung (30), den Verzweigungsabschnitt (29) und die zweite Abgabeleitung (28) zurück in den Puffertank (2),
- Kühlen des Wassers in dem Puffertank (2) durch eine Kühleinheit (3) mindestens während der Zirkulation bei der ersten Strömungsgeschwindigkeit, wobei die Kühleinheit (3) vorzugsweise einen Teil des Wassers in dem Puffertank (2) an der Innenwand (4) seines Tankkörpers gefrieren lässt,
- Desinfizieren des Wassers, das in einer oder mehreren der ersten Abgabeleitung (30), der zweiten Abgabeleitung (28) und der dritten Abgabeleitung (23) fließt, durch UV-Licht, das von einer UV-Lampe (40) abgestrahlt wird, und/oder Desinfizieren des in dem geschlossenen Kreislauf zirkulierenden Wassers durch UV-Licht, das von einer UV-Lampe (40) abgestrahlt wird, und
- nachdem das Wasser desinfiziert wurde, Erhöhen der Strömungsgeschwindigkeit des Wassers auf die zweite Strömungsgeschwindigkeit bei oder über dem definierten Grenzwert.

14. Verfahren nach Anspruch 12 oder 13, wobei dem Puffertank (2) automatisch oder bei Bedarf über eine Zufuhrleitung (7) Wasser zugeführt wird, wobei vorzugsweise das durch die Zufuhrleitung (7) passierende Wasser durch einen Wasserfilter (9) in der Zufuhrleitung (7) gefiltert wird.

15. Verfahren nach einem der Ansprüche 12 bis 14, wobei das über die dritte Abgabeleitung (23) und den jeweiligen Auslaufauslass (24) abzulassende Wasser durch Inline-Karbonisierung karbonisiert wird.

## Revendications

1. Dispositif de préparation de boisson (1) comprenant un dispositif de séparation de flux (100), dans lequel le dispositif de séparation de flux (100) comprend :
- une première ligne de distribution (30) pour évacuer de l'eau d'un réservoir tampon (2),
- une section de ramification (29) prévue en aval de la première ligne de distribution (30), dans lequel la section de ramification (29) ramifie la première ligne de distribution (30) en une deuxième ligne de distribution (28) et une troisième ligne de distribution (23), chacune des deuxième et troisième lignes de distribution (28, 23) menant à une sortie d'évacuation respective (22, 24), et
- un dispositif de régulation de débit (26) pour distribuer de l'eau à travers le dispositif de séparation de flux (100) et pour ajuster le débit de l'eau,
dans lequel seul le dispositif de régulation de débit doit être actionné ou utilisé pour faire circuler sélectivement l'eau le long de la deuxième ligne de distribution (28) ou de la troisième ligne de distribution (23) et vers la sortie d'évacuation respective (22, 24),
dans lequel chacune de la deuxième ligne de distribution (28) et de la troisième ligne de distribution (23) comprend une section respective (281 ; 231), dans lequel lesdites sections (281, 231) sont agencées de telle sorte que
○ si de l'eau est distribuée par le dispositif de régulation de débit (26) à un débit inférieur à une valeur seuil définie l'eau est distribuée au-delà de la section (281) de la deuxième ligne de distribution (28) mais pas au-delà de la section (231) de la troisième ligne de distribution (23), évacuant ainsi l'eau par le biais de la sortie d'évacuation (22) de la deuxième ligne de distribution (28), et
si de l'eau est distribuée par le dispositif de régulation de débit (26) à un débit égal ou supérieur à la valeur seuil définie l'eau est au moins partiellement distribuée au-delà de la section (231) de la troisième ligne de distribution (23), évacuant ainsi l'eau au moins partiellement par le biais de la sortie d'évacuation (24) de la troisième ligne de distribution (23).

2. Dispositif de préparation de boisson (1) selon la revendication 1, dans lequel, par rapport à la deuxième ligne de distribution (28), la troisième ligne de distribution (23) s'étend sur une plus grande longueur et/ou, par rapport à la verticale, s'élève plus haut.

3. Dispositif de préparation de boisson (1) selon la revendication 1 ou 2, dans lequel, par rapport à la deuxième ligne de distribution (28), la troisième ligne de distribution (23) s'étend plus loin selon une direction qui est oblique par rapport à l'horizontale, telle qu'oblique avec un angle dans la plage de 0,5 à 5 degrés.

4. Dispositif de préparation de boisson (1) selon l'une quelconque des revendications précédentes, dans lequel la première ligne de distribution (30), la deuxième ligne de distribution (28) et/ou la troisième ligne de distribution (23) sont agencées de telle sorte que, lorsque le dispositif de régulation de débit (26) ne distribue pas d'eau, l'eau résiduelle restant dans la ligne de distribution (23, 28, 30) respective s'écoule par gravité hors de la ligne de distribution (23, 28, 30) respective, par exemple vers la sortie d'évacuation (22) de la deuxième ligne de distribution (28) et/ou la sortie d'évacuation (24) de la troisième ligne de distribution (23).

5. Dispositif de préparation de boisson (1) selon l'une quelconque des revendications précédentes, dans lequel un orifice (51) est prévu entre la première ligne de distribution (30) et la section de ramification (29), l'orifice (51) s'étendant de préférence en ligne droite vers la troisième ligne de distribution (23).

6. Dispositif de préparation de boisson (1) selon l'une quelconque des revendications précédentes, dans lequel le dispositif de régulation de débit (26) est prévu dans la première ligne de distribution (30) et/ou le dispositif de régulation de débit (26) est une pompe ou une vanne ou un robinet.

7. Dispositif de préparation de boisson (1) selon l'une quelconque des revendications précédentes, comprenant en outre
- un réservoir tampon (2) ayant un corps de réservoir pour stocker une quantité d'eau, dans lequel la première ligne de distribution (30) est agencée pour drainer de l'eau du réservoir tampon (2), et dans lequel la deuxième ligne de distribution (28) retourne par le biais de sa sortie d'évacuation (22) dans le réservoir tampon (2) formant ainsi une boucle fermée,
- une lampe UV (40) pour le traitement par lumière UV de l'eau dans la boucle fermée, et
- dans lequel le dispositif de régulation de débit (26) est agencé pour distribuer de l'eau à travers le dispositif de préparation de boisson (1).

8. Dispositif de préparation de boisson (1) selon la revendication 7, dans lequel la lampe UV (40) est agencée pour émettre par rayonnement de la lumière UV dans le réservoir tampon (2) et/ou dans la première ligne de distribution (30) et/ou dans la deuxième ligne de distribution (28).

9. Dispositif de préparation de boisson (1) selon la revendication 7 ou 8, comprenant en outre un ou plusieurs des éléments suivants :
- une unité de refroidissement (3) pour refroidir l'eau à l'intérieur du réservoir tampon (2), dans lequel l'unité de refroidissement (3) est de préférence agencée et configurée pour geler une quantité d'eau au niveau d'une paroi interne (4) du corps de réservoir, dans lequel l'unité de refroidissement (3) entoure de préférence au moins partiellement le corps de réservoir ;
- une alimentation en eau (6) étant reliée au réservoir tampon (2) par une conduite d'alimentation (7) pour fournir de l'eau dans le réservoir tampon (2), dans lequel l'alimentation en eau (6) est un réservoir d'eau principal étant de préférence prévu de manière amovible ou d'un seul tenant ;
- un dispositif de carbonatation en ligne (50) pour introduire du CO2 dans l'eau en circulation, de préférence dans la troisième ligne de distribution (23) ou la section de ramification (29), de préférence au niveau de ou en aval d'un ou de l'orifice (51) ;
- un boîtier d'isolation (80) encapsulant le réservoir tampon (2), la première ligne de distribution (30), la deuxième ligne de distribution (28), la section de ramification (29) et une lampe UV (40), et de préférence également le dispositif de régulation de débit (26), la conduite d'alimentation (7) et un filtre à eau (9).

10. Dispositif de préparation de boisson (1) selon la revendication 9, dans lequel la conduite d'alimentation (7) comprend le filtre à eau (9) pour filtrer l'eau passant à travers la conduite d'alimentation (7) depuis l'alimentation en eau (6) vers le réservoir tampon (2), dans lequel le filtre à eau (9) comprend au moins un élément du groupe constitué par un filtre à particules, un dispositif d'ultrafiltration, un dispositif de nanofiltration, un dispositif à charbon actif et un dispositif d'osmose inverse.

11. Dispositif de préparation de boisson (1) selon l'une quelconque des revendications 7 à 10, comprenant en outre une section d'additifs pour boissons (60) afin de distribuer des additifs, tels que sous forme de liquide ou sous forme de liquide comprenant des particules solides, par l'intermédiaire de la sortie d'évacuation (24) de la troisième ligne de distribution (23), dans lequel la section d'additifs pour boissons (60) est de préférence agencée dans une conduite d'évacuation secondaire (61) raccordant le réservoir tampon (2) ou la première ligne de distribution (30), par exemple, faisant partie d'une ligne de recirculation (20) pour former une boucle fermée, avec la sortie d'évacuation (24) de la troisième ligne de distribution (23) pour alimenter la section d'additifs pour boisson (60) avec l'eau provenant du réservoir tampon (2), et
dans lequel les additifs comprennent de préférence au moins un élément du groupe constitué par : des saveurs, des arômes, des minéraux, un concentré liquide minéral, un concentré fonctionnel, un concentré aromatisant comestible, un extrait de thé et/ou de café, un jus de fruits, une solution mère de minéraux ou des combinaisons de ceux-ci,
dans lequel la section d'additifs pour boisson (60) est de préférence adaptée pour distribuer les additifs à l'eau provenant d'un réservoir tampon (2) de telle sorte que les additifs représentent une quantité allant jusqu'à 5 %, de préférence de 0,05 % à 1 %, de préférence de 0,1 % à 0,5 % en volume, de la matière liquide résultante dans le produit final.

12. Procédé de séparation d'un flux par le biais d'une section de ramification (29) pour préparer une boisson par le biais de la section de ramification (29), dans lequel la section de ramification (29) ramifie une première ligne de distribution (30) en une deuxième ligne de distribution (28) et une troisième ligne de distribution (23), dans lequel seul un dispositif de régulation de débit (26) est actionné pour faire circuler sélectivement de l'eau le long de la deuxième ligne de distribution (28) ou de la troisième ligne de distribution (23) et vers une sortie d'évacuation respective (22, 24), dans lequel il comprend les étapes consistant à :
- distribuer l'eau à un premier débit par le biais de la première ligne de distribution (30), la section de ramification (29) et la deuxième ligne de distribution (28), évacuant ainsi l'eau par le biais d'une sortie d'évacuation (22) de la deuxième ligne de distribution (28) mais pas au-delà d'une section (231) de la troisième ligne de distribution (23),
- augmenter le débit de l'eau à un deuxième débit égal ou supérieur à une valeur seuil définie de sorte que l'eau soit forcée au niveau de la section de ramification (29) le long de la troisième ligne de distribution (23) et au-delà de ladite section (231) de la troisième ligne de distribution (23) pour évacuer l'eau au moins partiellement par le biais d'une sortie d'évacuation (24) de la troisième ligne de distribution (23).

13. Procédé selon la revendication 12, comprenant en outre les étapes suivantes :
- le remplissage d'eau dans un réservoir tampon (2),
- la circulation de l'eau au premier débit en boucle fermée depuis le réservoir tampon (2) par le biais de la première ligne de distribution (30), de la section de ramification (29) et de la deuxième ligne de distribution (28) de retour dans le réservoir tampon (2),
- le refroidissement de l'eau dans le réservoir tampon (2) par une unité de refroidissement (3) au moins pendant la circulation au premier débit, dans lequel l'unité de refroidissement (3) gèle de préférence une partie de l'eau dans le réservoir tampon (2) au niveau de la paroi interne (4) de son corps de réservoir,
- la désinfection de l'eau s'écoulant dans une ou plusieurs parmi la première ligne de distribution (30), la deuxième ligne de distribution (28) et la troisième ligne de distribution (23) par de la lumière UV émise par rayonnement par une lampe UV (40), et/ou la désinfection de l'eau circulant de l'eau dans la boucle fermée par de la lumière UV émise par rayonnement par une lampe UV (40), et
- après que l'eau a été désinfectée, l'augmentation du débit de l'eau jusqu'au deuxième débit égal ou supérieur à la valeur seuil définie.

14. Procédé selon la revendication 12 ou 13, dans lequel le réservoir tampon (2) est alimenté en eau, automatiquement ou sur demande, par le biais d'une conduite d'alimentation (7), dans lequel, de préférence, l'eau traversant la conduite d'alimentation (7) est filtrée par un filtre à eau (9) dans la conduite d'alimentation (7).

15. Procédé selon l'une quelconque des revendications 12 à 14, dans lequel l'eau à évacuer par le biais de la troisième ligne de distribution (23) et la sortie d'évacuation respective (24) est carbonatée par carbonatation en ligne.
